# EUROPEAN PATENT APPLICATION

(11) **EP 1 353 270 A2**
(43) Date of publication of application: **15.10.2003**
(21) Application number: 02015668.3
(22) Date of filing: 17.07.2002
(51) Int. Cl.: G06F 9/46, G06F 17/30

(54) **Session preservation and migration among different browsers on different devices**

(30) Priority: 10.04.2002 US 120087
(71) Applicant: DoCoMo Communications Laboratories USA, Inc., San Jose, CA 95110 (US)
(72) Inventor: Song, Yu, c/o DoCoMo Communications Lab. USA, Inc., San Jose, California 95110 (US); Chu, Hao-hua, Mountain View, CA 94043 (US); Islam, Nayeem, Palo Alto, CA 94303 (US); Kurake, Shoji, c/o DoCoMo Communicat.Lab.USA,Inc., San Jose, California 95110 (US)
(74) Representative: HOFFMANN - EITLE

(57) **Abstract**

A browser state repository (BSR) service allows a user to save and restore independent browser states of active sessions between browsers and sites. Each independent browser state may be associated with the user and stored as a browser snapshot. The user may later retrieve any saved browser snapshot on any browser and/or any device and restore the corresponding active session with the corresponding site. The BSR service decouples the traditional association between the browser state and a device, in favor of an association between the browser state and a user that is independent of any browser or device.

## Description

### Field of the Invention

The present invention relates generally to communication between devices on a network, and more particularly, to methods and systems that preserve the active state of one or more independent sessions initiated with a browser for later retrieval to continue the preserved session(s) with the same or a different browser and/or device.

### Background of the Invention

Utilization of the Internet to access information as well as for purchasing goods and services is common today. Typically, access to the Internet involves a browser. Browsers may be utilized to access websites over the Internet. Such websites include information and/or the capability to purchase goods and services. Interaction between browsers and websites is usually session oriented. Typically, websites require a browser to first establish a session and a session ID. The session ID may be used by a website to track and identify the browser as it moves between different pages within the website. During an active web session, a browser may accumulate a session state that is used to interact with the website over a stateless HTTP protocol. The session state of a browser can appear in cookies, document objects and script objects. When the browser exits the website, the active web session is closed and some of the browser state is un-recoverable.

This session-oriented model inherently prohibits a user from maintaining the same active session when the browser that initiated the session is temporarily shut down. In addition, continuation of the same active session may not occur when a user desires to switch from a browser on one device to a different (or the same) browser on a different device. For example, a user running an active session on a stationary device (such as a desktop PC) may not be able to interchange the stationary device with a mobile device (such as a Pocket PC with wireless access) without closing the active session on the stationary device and starting over with a new active session on the mobile device. Similarly, a user with an active session on a wireless device may not be able to preserve the session when the user elects to temporarily interrupt the wireless connection in an effort to minimize wireless airtime charges while performing other activities.

One well-known mechanism for accessing web pages with a browser involves utilization of bookmarks to save the uniform resource locators (URLs) of web pages for later access. The bookmarking concept, such as, for example, "Favorites" within Microsoft™ Internet Explorer™, provides efficient and quick access to web pages. Such bookmarking, however, provides only a return path to a static webpage. Since no session specific information, such as, for example, product selection criteria, purchasing information or any other information related to a particular active web session is preserved, such information must be recreated.

Another well-known mechanism for storing information related to an active session involves the use of cookies. In general, cookies are browser-side storage mechanisms that websites may use to store intra-session or inter-session information pertaining to a user operating a browser. Typically, cookies include information set by and later sent to the website being accessed by a browser. The cookies are transmitted to the device on which the browser is operating and stored therein. The browser may then include the previously stored cookie with each communication to the associated website. Since such cookies are associated with, and stored on, a single device, the cookies are not accessible to browsers operating on other devices.

Yet another well-known mechanism provided by some websites identifies the user of the browser and saves purchasing information accumulated during an active session. The information is stored in a server-side database for retrieval in a later session. Not only do these techniques require significant user tracking capability at each website, but also place burdens on users to complete a sign-in process before any decision to purchase goods or services is contemplated. In addition, the purchasing information saved by such websites does not include a information related to the active session, such as, for example, the previous pages displayed by the browser, values customized during the session and/or any other information related to browser navigation and related customization within the website. Accordingly, much of the research and customization from a previous active session must be recreated once a new session with the website is initiated.

### Summary

The presently preferred embodiments disclose a browser state repository (BSR) service. The BSR service supports preservation of an active session with a site following establishment and customization with a browser. In addition, the BSR service allows migration of the active session to any other browser where further customization of the previously established session may occur. The preserved and migrateable active session represents the browser running state and includes customization that occurred during the active session. Accordingly, the BSR service decouples the traditional association between the browser running state and a device on which the browser operates, and instead creates an association between the browser running state and a user.

The BSR service is a session preservation and migration system that may preserve the current state of an active session established between a browser and a site. The infrastructure supporting the BSR service includes at least one browser and at least one repository server. In one embodiment, a first browser in communication with the repository server may establish an active session with a site. A current browser state of the active session may be captured and stored by the cooperative operation of the first browser and the repository server. A second browser cooperatively operating with the repository server may retrieve the current browser state of the active session. Once retrieved, the current browser state of the active session may be restored in the second browser, and the active session with the site continued with the second browser.

The operation of each browser within the BSR service is enhanced by a BSR device module. The BSR device module includes a security component, a user interface component, a capture component and a restore component, which may be utilized in connection with the capture and restoration of the current browser state of an active session. In addition, the repository server within the BSR service includes a BSR repository module. The BSR repository module includes a login security component, a page server component, a snapshot component, a communication security component and a timer component. With the cooperative operation of the BSR device module and the BSR repository module, the running state of a browser in an active session may be captured and securely stored. In addition, secure retrieval and restoration of the browser running state on the same, or a different browser may occur using the BSR device module and the BSR repository module.

An interesting feature of one embodiment of the BSR service relates to the relatively simple deployment and utilization of the BSR device module and the BSR repository module. In this embodiment, the BSR device module is a browser side plug-in that may be downloaded and installed into any browser. Accordingly, modification and/or customization of the browser is minimal to deploy the BSR service. In addition, little or no modification is required on sites to allow the BSR service to capture and store the current browser state of active sessions established with those sites by browsers.

Yet another interesting feature of the BSR service involves the browser state of an active session. Since, the browser state of an active session may be captured and stored by a user of the BSR service, the browser state is not associated with any particular browser or any particular device. Instead, the browser state is inherently associated with the user, who may not only store the browser state, but also, retrieve the browser state and continue the active session with any browser and/or any device.

Still another interesting feature involves the capture, storage and restoration of the current browser state of an active session. The BSR service allows a user to capture and store the current browser state of an active session that has been customized by the user. The current browser state may later be retrieved and restored to the active session by the user. The active session is restored to the state of customization present when the capture occurred. As such, the user may continue with the browser state of the active session as if capture, storage and restoration of the browser state had not taken place.

Further objects and advantages of the present invention will be apparent from the following description, reference being made to the accompanying drawings wherein preferred embodiments of the present invention are clearly shown.

### Brief Description of the Drawings

Figure 1 is a block diagram of an embodiment of a browser state repository (BSR) service.
Figure 2 is a more detailed block diagram of the BSR service illustrated in Figure 1 and includes a site.
Figure 3 is a more detailed block diagram of one embodiment of a browser state repository (BSR) device module illustrated in Figure 2.
Figure 4 is an embodiment of a user interface bar activatable by the BSR device module illustrated in Figure 3.
Figure 5 is another embodiment of a user interface bar activatable by the BSR device module illustrated in Figure 3.
Figure 6 is a more detailed block diagram of one embodiment of a browser state repository (BSR) repository module illustrated in Figure 2.
Figure 7 is a flow diagram illustrating operation of an embodiment of the BSR service.
Figure 8 is a second portion of the flow diagram illustrated in Figure 7.
Figure 9 is a flow diagram illustrating operation of another embodiment of the BSR service.

### Detailed Description of the Preferred Embodiments

The presently preferred embodiments describe a browser state repository (BSR) service that allows a user operating a browser to save browser states from one or more active sessions. The BSR service allows the user to later selectively retrieve any of the saved browser states with any browser and/or any device to continue the same corresponding active session. The running state of the browser may be restored to the same point in the active session at which the browser state was saved. Accordingly, the BSR service may allow users to switch to a new device/browser in the middle of an active session without losing the browser state of the active session and having to start over with a new browser state on the new device. In addition, the BSR service may allow a user to keep track of browser states from multiple active sessions simultaneously, as well as the ability to save and later continue any active session(s) from any device/browser.

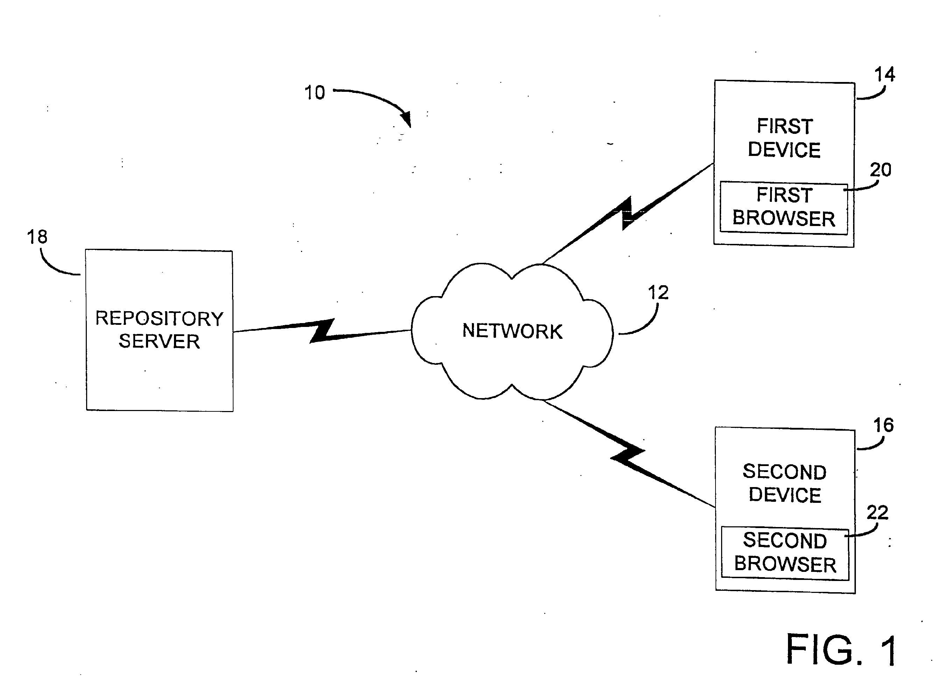

FIG. 1 is a block diagram of one embodiment of the BSR service 10 operating over a network 12. The BSR service 10 includes at least one device illustrated as a first device 14 and a second device 16. In addition, the BSR service includes at least one repository server 18. The first and second devices 14, 16 and the repository server 18 are communicatively coupled via the network 12 as illustrated in FIG. 1. In other embodiments, the BSR service 10 may include any number of devices, repository servers and/or any other network compatible devices. As used herein, the term "coupled", "connected", or "interconnected" may mean electrically coupled, optically coupled, wirelessly coupled and/or any other form of coupling providing an interface between systems, devices and/or components.

The network 12 may include the Internet, a public and/or private intranet, an extranet, and/or any other form of network configuration to enable transfer of data and commands. Communication within the network 12 may be performed with a communication medium that includes wireline based communication systems and/or wireless based communication systems. The communication medium may be for example, a communication channel, radio waves, microwave, wire transmissions, fiber optic transmissions, or any other communication medium capable of transmitting data, audio and/or video information.

The first and second devices 14, 16 may be any type of computing device or similar hardware capable of providing a connection for communication over the network 12. In addition, the first and second devices 14, 16 may include a user interface (UI), memory, a microprocessor and/or any other hardware and associated operating systems/applications. For example, the first and second devices 14, 16 may be wireless devices, such as, a wireless phone, a personal digital assistant (PDA), a pocket personal computer (PC) or any other device capable of wireless communication. In addition, the first and second devices 14, 16 may be wireline devices, such as, for example, a network terminal, a personal computer, a server computer or any other device capable of wireline communication over the network 12. In other embodiments, the first and second devices 14, 16 may include both wireline and wireless communication capabilities.

As further illustrated in FIG. 1, operating on the first device 14 is a first browser 20. Similarly, a second browser 22 may operate on the second device 16. The first and second browsers 20, 22 may be any form of application running on the first and second devices 14, 16 capable of locating and displaying pages downloaded from other devices in the network 12. In the presently preferred embodiments, the first and second browsers 20, 22 are web browsers, such as, for example, Microsoft™ Internet Explorer™ and/or Netscape Navigator™. In other embodiments, the first and second browsers 20, 22 may be any other form of homogeneous or heterogeneous browsers with the functionality to locate and display any form of pages downloaded over the network 12. In addition to displaying text and graphics, the first and second browsers 20, 22 may also support the presentation of video, audio, multimedia and/or any other information. Operation of the BSR service 10 is also preferably supported by the first and second browsers 20, 22. The first and second browsers 20, 22 may be launched and operated on the first and second devices 14, 16 to cooperatively operate with the repository server 18.

The repository server 18 may be any form of computing device, such as, for example, at least one server, capable of receiving requests and transmitting responses over the network 12. In the illustrated embodiment, the repository server 18 may operate within the infrastructure of the BSR service 10 to monitor requests from, and transmit responses to, the first and second browsers 14, 16. In one embodiment, the repository server 18 is a hypertext transfer protocol (HTTP) server. In this embodiment, the first and second browsers 14, 16 may use HTTP and/or secure HTTP (HTTPS) for communication with the repository server 18. In other embodiments, other protocols, such as, for example, remote message interface (RMI), common object request broker architecture (COMA), component object model (COM), public and private proprietary protocols or any other protocol may be used.

During operation of the BSR service 10, a user may establish an active session utilizing the first browser 20 operating on the first device 14. The term "active session" refers to any form of interaction with another device on the network 12 in which information provided by the other device is displayed, communicated, or otherwise conveyed to a user operating the first browser 20. An exemplary active session is a web session in which web pages and associated materials may be located, downloaded and displayed with the first browser 20.

Following establishment and customization of the active session, the user may capture and store a current browser state of the active session using the BSR service 10. As used herein, "customize" or "customization" of an active session includes any changes to the active session resulting from interactions with the first browser 20 that accumulates in the state of the active session. Further, the term "current browser state" or "browser state" represents the customized state of the active session a user has created with a browser. The captured current browser state of the active session may be referred to as a "snapshot" or a "browser snapshot" since the current running state of the active session on the first browser 20 and attributes associated therewith may be captured in a storable format.

The current browser state of the active session may include the browser cache and the browser history. The browser cache and the browser history may include, for example, the last page displayed by the first browser 20 as well as the current state of document objects and scripting objects. Accordingly, pages within the captured current browser state of the active session may be dynamic or static. In addition, the browser cache and the browser history may include values modified/entered on previous pages and/or the last page, browser history for back and forward pages, cookies and/or any other parameters associated with the current state of the active session that are customizable by the user. The user may securely store the current browser state of the active session within the network 12 using the repository server 18.

The BSR service 10 allows the user to securely retrieve the stored current browser state of the active session at a later time. The user may retrieve the stored current browser state with the repository server 18 and any browser on any device. For example, the user may use the first browser 20 on the first device 14, the second browser 22 on the second device 16 or any other device and associated browser. Upon retrieval of the stored current browser state, the browser state of the active session may be restored such that the same active session may be continued from the point at which the snapshot was taken.

For example, consider a user operating the first browser 20 with a desktop PC at the office to shop for window draperies. Following successive composition of a number of choices of preferred colors, patterns and styles on different pages during an active session, the user must go home to measure the windows. Similarly, the same user may use the first browser 20 in another active session to successively compose a number of different possible flight itineraries on different pages in an active session with the intent of later purchasing an airline ticket.

Using the BSR service 10, the user may capture the current browser state of each of these customized active sessions prior to shutting down the first browser 20. The user may then go home, measure windows, finalize travel plans and launch the second browser 22 on the second device 16 such as, for example, a pocket PC. Following retrieval and restoration of the previously stored browser snapshots, the user may browse the previously customized pages in the active session and finalize a selection of draperies. In addition, the user may browse the previously customized pages and choose one of the flight itineraries composed in the earlier customized active session.

In one embodiment, the BSR service 10 is deployed within the infrastructure and associated protocols of the Internet. In this embodiment, deployment requires relatively little modification to existing websites, devices and associated browsers. In other embodiments, the BSR service 10 may be deployed in any other infrastructure with any other associated protocols.

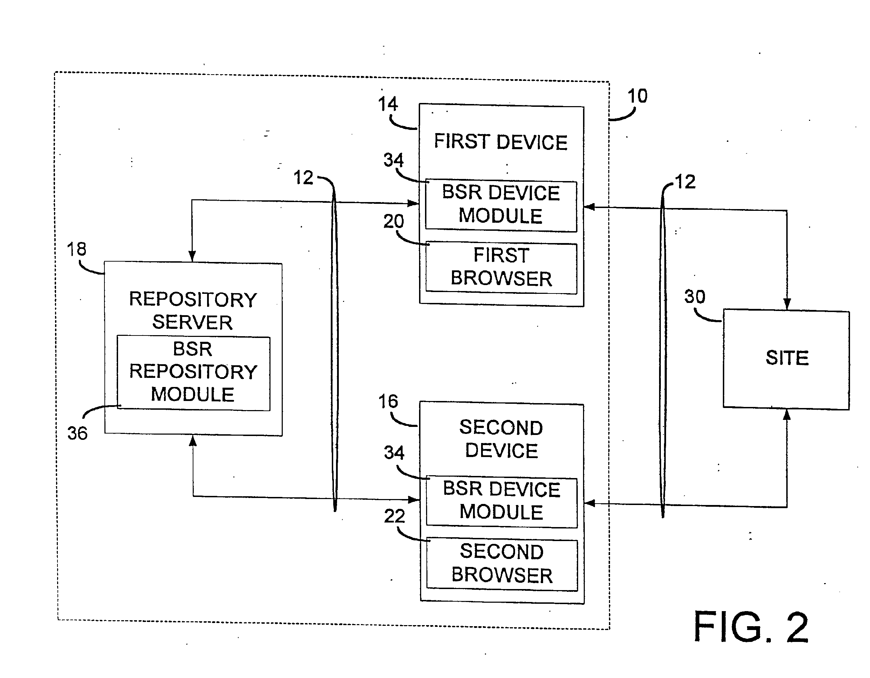

FIG. 2 includes a more detailed block diagram of one embodiment of the BSR service 10. Similar to the embodiments described with reference to FIG. 1, the BSR service 10 includes the first device 14 with the first browser 20, the second device 16 with the second browser 22 and the repository server 18 communicating over the network 12 as illustrated. FIG. 2 also depicts at least one site 30 in communication with the repository server 18 and the first and second devices 14, 16, respectively, over the network 12. As further shown in FIG. 2, portions of the infrastructure of the BSR service 10 of this embodiment are illustratively depicted as a BSR device module 34 operating within the first and second devices 14, 16, and a BSR repository module 36 operating within the repository server 18. In other embodiments, any number of secure and/or non-secure sites may be included. In addition, fewer or greater numbers of modules may be illustrated to represent portions of the BSR service 10.

The site 30, on the other hand, may be any mechanism communicating over the network 12 capable of providing access to information via a browser. The site 30 may be a non-secure site without any form of security to minimize the possibility of unauthorized access, or on the other hand, may be a secure site. Accordingly, the first and second browsers, 20, 22 may browse the site 30 using secure communications or non-secure communications depending on the level of security that is present. For example, the first and second browsers 20, 22 may communicate with HTTP messages when the site 30 is a non-secure site and with HTTPS messages when the site 30 is a secure site. In other embodiments, the site 30 may include portions representative of a secure site and other portions representative of a non-secure site. In these embodiments, communications may shift between secure communications and non-secure communications depending on the portion of the site being browsed.

The BSR device module 34 may be any application launched on at least one of the first and second devices 14, 16 to enhance or otherwise cooperatively operate with the first and second browsers 20, 22, respectively, in support of operation of the BSR service 10. In the presently preferred embodiments, the BSR device module 34 is a downloadable browser plug-in which may be applied to the first and second browsers 20, 22. In general, a browser plug-in is a well-known type of application which adds capabilities or services to a larger application. In other embodiments, the BSR device module 34 may be a standalone module within each of the first and second devices 14, 16 operating to enhance the operation of the first and second browsers 20, 22, respectively.

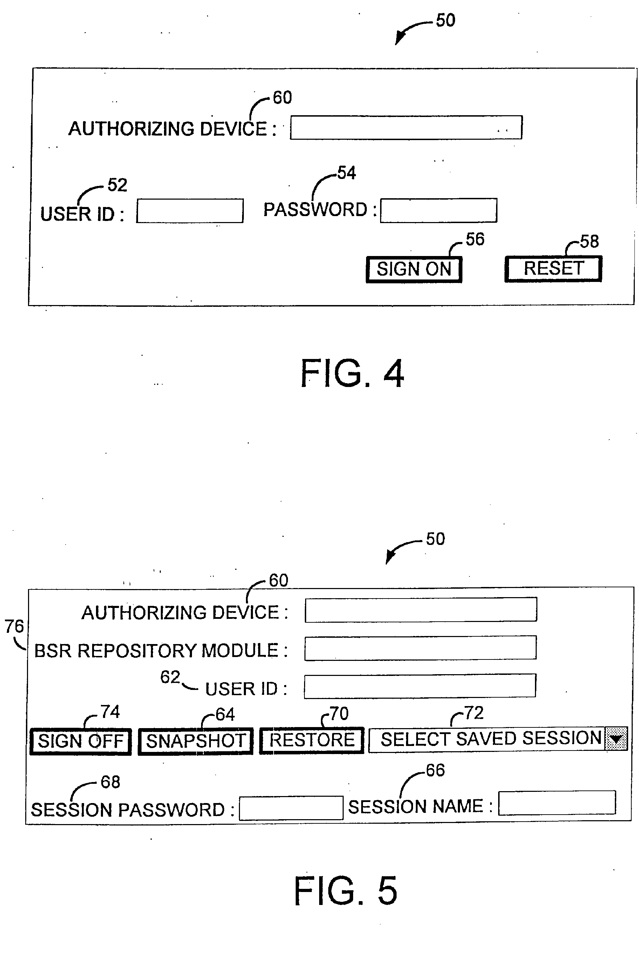

FIG. 3 is a block diagram depicting one embodiment of the BSR device module 34. In the illustrated embodiment, the functionality of the BSR device module 34 includes an interface component 40, a security component 42, a capture component 44 and a restore component 46. In other embodiments, additional functionality, such as, for example, snapshot storage capability, user verification capability or any other functionality associated with the BSR service 10 may be included in the BSR device module 34.

The interface component 40 provides an interface with the BSR service 10 for users of the first and second devices 14, 16. Utilizing the interface, a user may direct operation of additional functionality provided by the BSR device module 34 as well as the functionality of the BSR service 10. In addition, the interface component 40 may provide a transformation function to conform the user interface to the physical hardware of a particular device. For example, on one device the user interface may be a touch screen, on another device the user interface may be buttons and on yet another device the user interface may be audio/video interaction. Accordingly, the interface component 40 may sense the device hardware and transform the user interface to be compatible with the hardware.

The security component 42 may provide security to selectively maintain secure communications and avoid unauthorized utilization of the BSR service 10. The capture component 44 allows a user to take a browser snapshot of a current active session and store the snapshot. Similarly, the restore component 46 allows a user to direct the retrieval of a stored browser snapshot. A detailed discussion of the functionality of the components of the BSR device module 34 are hereinafter described.

FIGs. 4 and 5 illustrate embodiments of an interface in the form of a user interface bar 50. The user interface bar 50 may be activated and maintained with the interface component 40 (FIG. 3). In one embodiment the user interface bar 50 may be displayed within a browser window of a graphical user interface (GUI) of the first and second devices 14, 16 (FIG. 2). In other embodiments, the user interface bar 50 may be displayed within a separate window or as a separate page. In still other embodiments, the selectable features (hereinafter described) of the user interface bar 50 may be represented by hard buttons, individual icons, voice recognition and/or any other mechanism allowing a user to interface with and direct the functionality of the BSR service 10 (FIG. 2).

Once the interface module 40 is activated, the user interface bar 50 of the presently preferred embodiments may display at least one hypertext markup language (HTML) page. In these embodiments, the page(s) may be served from the repository server 18 (FIG. 2) on which the BSR repository module 36 (FIG. 2) is operating. Accordingly, relatively few modifications/additions are needed to the architecture of the first and second browsers 20, 22 to implement the interface component 40.

In other embodiments, the page(s) may be, for example, an extensible markup language (XML) page, a wireless markup language (WML) page, a compact hypertext markup language (cHTML) page and/or a page represented by any other language. In addition, the page(s) may be served from any other device within the network 12 in cooperative operation with the interface component 40. In still other embodiments, the user interface bar 50 may be independently generated and maintained by the interface component 40. In these embodiments, the interface component 40 may decipher and communicate commands and information over the network 12 (FIG. 2) as a function of commands entered via the user interface bar 50.

The embodiment illustrated in FIG. 4 depicts the user interface bar 50 as a login screen that includes a user ID entry 52, a password entry 54, a sign on button 56, a reset button 58, and an authorizing device ID 60. In other embodiments, any other user identification related functionality may be included in the login screen of the user interface bar 50. The login screen allows a user to enter login information. The login information may be used to prevent a user access to the BSR service 10 (FIG. 2) without first being authenticated and obtaining authorization.

Referring now to FIGs. 2, 3 and 4, in the presently preferred embodiments, authentication and authorization is provided by the BSR repository module 36. In these embodiments entry of a user name in the user ID entry 52 along with a password in the password entry 54 are transmitted over the network to the BSR repository module 36 for authentication and authorization. The security component 42 may initiate the establishment of a secure connection, such as, for example, a secure sockets layer (SSL) connection, with the BSR repository module 36 to begin the authentication and authorization process. Initiation of a secure connection by the security component 42 may involve identifying the user name and password information as secure by, for example, making the information an HTTPS message. The login screen of these embodiments is preferably served from the repository server 18 on which the BSR repository module 36 is operating. In addition, the establishment of the secure connection is provided with the first and second browsers 20, 22.

The security component 42 may also operate in conjunction with the interface component 40 to maintain the functional operation of the login screen. For example, initiation of the authentication and authorization process by the security component 42 may occur when the sign on button 56 is activated. In addition, subsequent messages sent over the network from the BSR device module 34 to the BSR repository module 36 may be identified as secure messages by the security component 42. In other embodiments, login information may be provided to the security component 42 externally by data from a personal information storage device (such as a personal information card), a biological scanner (such as a voice, fingerprint or retina scanner) and/or any other mechanism for identifying a user. In still other embodiments, the security component 42 may generate the login screen as well as provide authorization to allow a user access to the functionality of the BSR service 10. In yet another embodiment, the security component 42 may provide a level of local security such as, for example, a time out password when the user interface bar 50 is inactive for extended periods.

The authorizing device ID 60 identifies at least one device within the network 12 to which login information may be submitted for authentication of the identity of the user. The device(s) may be any network-connected device(s) with the capability to compare information from a user created account to login information transmitted via the security component 42. In the presently preferred embodiments, users may create an account with the BSR repository module 36. Accordingly, the authorizing device ID 60 of this embodiment may include an identifier of the repository server 18 within which the BSR repository module 36 operates. The identifier may be, for example, an Internet Protocol (IP) address or any other form of identifier.

As illustrated in the embodiment of FIG. 5, the user interface bar 50 may also represent a user screen for interfacing with the BSR service 10. The user interface bar 50 of this embodiment includes the authorizing device ID 60, a user ID indication 62, a snapshot button 64, a session name field 66, a session password field 68, a restore button 70, a session selection field 72, a sign off button 74 and a BSR repository module indication 76. In other embodiments, additional functionality and information related to operation of the BSR service 10 may be included in the user interface bar 50.

Referring now to FIGs. 2, 3 and 5, the user screen of this embodiment may be displayed in the user interface bar 50 following authentication and authorization of login information supplied by a user. Accordingly, the user ID indication 62 may identify the successfully logged in authorized user. Identity may include, for example, a user name, a number or any other indication of the currently authorized user.

The snapshot button 64 provides a user the ability to activate the capture component 44 within the BSR device module 34. As previously discussed, the capture component 44 provides the capability to take a snapshot or otherwise capture the current browser state of an active session. When a snapshot is initiated, the capture component 44 captures a plurality of session parameters related to the browser state of the current session. In one embodiment, the session parameters may include at least one document object model (DOM) representative of a current page(s) being displayed in the browser, at least one scripting object of the current page(s), a browser history, a browser cache and cookies of the current session. In other embodiments, any other forms of session parameters representative of the current active state of the session may be captured by the capture component 44.

As known in the art, DOM includes a set of application programming interfaces (APIs) for valid HTML and XML documents. In general, the DOM defines an abstract logical structure for documents, and includes standard interfaces for access and manipulation of documents displayed in browsers. The interfaces defined by DOM may be used to build, traverse, and modify a document structure along with the elements contained therein.

For example, when an HTML page is parsed with a Microsoft™ Internet Explorer™ browser, a DOM structure is created. The DOM structure may represent the structure of the runtime state of an HTML page in the browser. Each node in the DOM structure represents a DOM element. Each DOM element may represent, for example, a particular HTML tag or HTML element from the HTML page. As known in the art, a set of properties describing the presentation and behavior within a browser of each element, such as an HTML element, is included in each DOM element. The BSR device module 34 may be directed to capture such a DOM structure, including content and node properties, in a session snapshot. In other embodiments, browsers with different capabilities such as, for example, compact HTML (cHTML), wireless application protocol (WAP), wireless markup language (WML) and/or any other protocol/language may be used to create a structure that may be captured by the BSR device module 34.

Following download of a page into, for example, a Microsoft™ Internet Explorer™ browser, the current browser state of an active session may be preserved with the BSR service 10. When a user activates the snapshot button 64, the capture component 44 may proceed through all document objects inside a top-level frame of the current page in the browser. The capture component 44 may capture each node element and associated properties within the top-level frame. In addition, the capture component 44 may recursively proceed down through lower level frames to capture additional node elements and properties of the DOM structure.

Another session parameter that may be captured by the capture component 44 is a scripting object(s). Scripting objects such as, for example, VB Script and JavaScript may also be included in a page(s) downloaded into a browser. The capture component 44 may capture such scripting object(s) as part of a browser snapshot. In one embodiment, the scripting objects are captured as part of the DOM document. Accordingly, the capture component 44 may capture both the DOM and the scripting object(s) representative of the current page at the same time. In other embodiments, the scripting objects may be captured independently by the capture component 44.

With, for example, a Microsoft™ Internet Explorer™ browser, script variables may be defined in script tags represented as IDispatch objects. The IDispatch objects may be accessed at runtime through a script engine provided within the Microsoft™ Internet Explorer™ browser. In one embodiment of the capture component 44, when a snapshot is captured from a Microsoft™ Internet Explorer™ browser, the IDispatch objects corresponding to the script variables may be serialized and captured without corresponding script functions. As known in the art, the script functions in a Microsoft™ Internet Explorer™ browser do not change. In other embodiments, both the script functions and the script variables may be captured by the capture component 44.

Yet another session parameter that may be captured by the capture component 44 is cookies. Generally, cookies are well-known device identifiers that may include user specific information. As known in the art, cookies may be provided to browsers along with pages downloaded into the browser. In the presently preferred embodiments, the capture component 44 does not interpret cookies in name/value pairs as part of the capture process. Instead, cookies may be captured and appended to the other information captured by the capture component 44. In embodiments where the Microsoft™ Internet Explorer™ browser is used, the cookies may be appended after the previously discussed DOM structure within each snapshot.

Still another session parameter that may be captured by the capture component 44 is the browser history of an active session. The browser history is a compilation of previous pages to which a browser has visited. Accordingly, the capture component 44 may capture and append the pages identified in the browser history to the other captured information. In embodiments operating with the Microsoft™ Internet Explorer™ browser, a IURLHistoryStg interface is included to retrieve and set a URL history in the browser. In these embodiments, capturing the browser history involves simply enumerating over the URL history, fetching identified URLs, and appending the fetched URLs to follow the DOM structure and cookies.

In one embodiment, the capture component 44 may provide the user an opportunity to establish a session name and a session password for the captured current browser state of an active session. The user may enter a unique session name in the session name field 66 illustrated in FIG. 4. Alternatively, the user may select an existing session name from a previously captured browser state. In one embodiment, where no session name is provided a default session name, such as, for example the host name of a website may be generated to identify the captured browser state of the active session.

The user may also have the option of protecting the browser snapshot with a session password entered in the session password field 68 illustrated in FIG. 4. The session password offers additional security to avoid unauthorized access to a captured browser snapshot. In other embodiments, entry of the session password may involve an audio password or any other mechanism for providing secure access to the browser snapshot.

Once captured, a browser snapshot may be associated with the user initiating the capture. Accordingly, the snapshot is associated with the user and not the browser and/or device from which the active browser state was captured. Association with the user may include identifying the snapshot with account information of a user's account, a user name or any other mechanism for uniquely identifying the user who customized the active session and captured the browser snapshot. The browser snapshots associated with each user may be stored in a secure location within the network 12.

In the presently preferred embodiments, storage may occur at the BSR repository module 36. In these embodiments, the security component 42 may initiate establishment of a secure connection between the BSR device module 34 and the BSR repository module 36 to transmit the captured browser state of the active session over the network 12. In other embodiments, where the captured browser state of the active session is stored elsewhere in the network 12, the security component 42 may initiate a secure connection with any other network connected device to allow secure transmission of the browser snapshot.

In one embodiment, storage of a browser snapshot may occur automatically following entry of a session name and session password. In other embodiments, the user may initiate storage with a separate command and/or selection of a storage location. If the user continues customizing the active session following initiation of a browser state capture, the capture component 44 may generate a warning of the potential for inconsistency with the captured browser snapshot that has been stored for the active session.

As previously discussed, the BSR device module 34 also includes the restore component 46. Stored browser snapshots may be retrieved at the direction of a user using the user interface bar 50. Retrieval may be initiated with the restore button 70 and the session selection field 72. Following successful authentication and authorization, a user may select previously stored browser snapshots associated with that user. Selection may involve a pull down menu list, an index, a database, manual entry of a session name, or any other look up mechanism for identifying a list of browser snapshots captured and associated with that user. The look up mechanism and/or the list may be provided by the BSR repository module 36, the security component 42 and/or any other device associated with the storage location of the browser snapshots.

Once a previously captured and stored browser state for the active session is selected, retrieval may be initiated with the restore button 70. In one embodiment, where the browser state of the active session is stored at the BSR repository module 36, the stored browser snapshot may be downloaded over the secure connection previously established to authorize and authenticate the user during the login process. In this embodiment, if the secure connection no longer exists, the security component 42 may again initiate establishment of the secure connection. In another embodiment, where the browser snapshot is stored elsewhere in the network 12, the security component 42 may initiate a secure connection to allow secure retrieval.

If a session password is associated with the selected stored browser snapshot, the session password may be entered in the session password field 68. The session password may be authenticated with the BSR repository module 36, the security component 42 or any other device associated with the storage location of the browser snapshots. Accordingly, without a session password, users may not be able to retrieve a saved browser snapshot following successful login verification and authorization.

Following receipt, the restore component 46 may restore the browser snapshot. Restoration of the browser snapshot involves conversion of the browser snapshot back into a browser state of an active session. Upon restoration, the active session may be displayed by the browser in the same condition as when the snapshot was initiated. Display of the browser state of the active session in one embodiment results from restoration of the previously capture document object and scripting objects as earlier described. In addition, values entered on other pages, the browser history, the browser cache, cookies and/or any other information customized during the active session may also be restored.

In one embodiment, the restoration involves re-downloading content from the site 30 (FIG. 2). After the content is downloaded into the browser from the site 30, the restore component 46 of the BSR device module 34 may utilize the browser snapshot to customize the content thereby restoring the previously stored browser state of the active session. In one embodiment, the DOM structure of the downloaded content may be utilized in restoration of the previously capture DOM structure. In this embodiment, the restore component 46 may restore the values and the properties of each DOM node in the downloaded content according to the previously capture DOM structure. After the DOM structure is restored, the restore component 46 may proceed with restoration of cookies, script object variable values and browser history.

Referring again to FIGs. 2, 3 and 5, the sign off button 74 represents additional functionality provided within the security module 42. The security module 42 may initiate the log off process, or otherwise terminate user access to the BSR service 10 when the sign off button 74 is activated. Upon activation of the sign-off button 74, the security module 42 may disconnect the BSR device module 34 from the associated browser. In addition, the security module 42 may direct the interface component 40 to deactivate and close the user interface bar 50.

The BSR repository module indication 76 may indicate the location of the device upon which the BSR repository module 36 is operating. The location indication may be an IP address, a physical location or any other form of unique identifier. Accordingly, where there are a number of BSR repository modules 32 available, the BSR repository module indication 76 may allow selection of a desired location.

Referring once again to FIG. 2, the BSR repository module 36 may be any application operating on a device capable of communication with the BSR device module 34 over the network 12, and supporting operation of the BSR service 10. In the presently preferred embodiments, the BSR repository module 36 operates within the repository server 18. In other embodiments, the BSR repository module 36 may operate within any other network-connected device. In the illustrated embodiment, the repository server 18, operating in conjunction with the BSR repository module 36, may be a commercial provider of server services, or a privately configured and maintained source of server services for the BSR service 10.

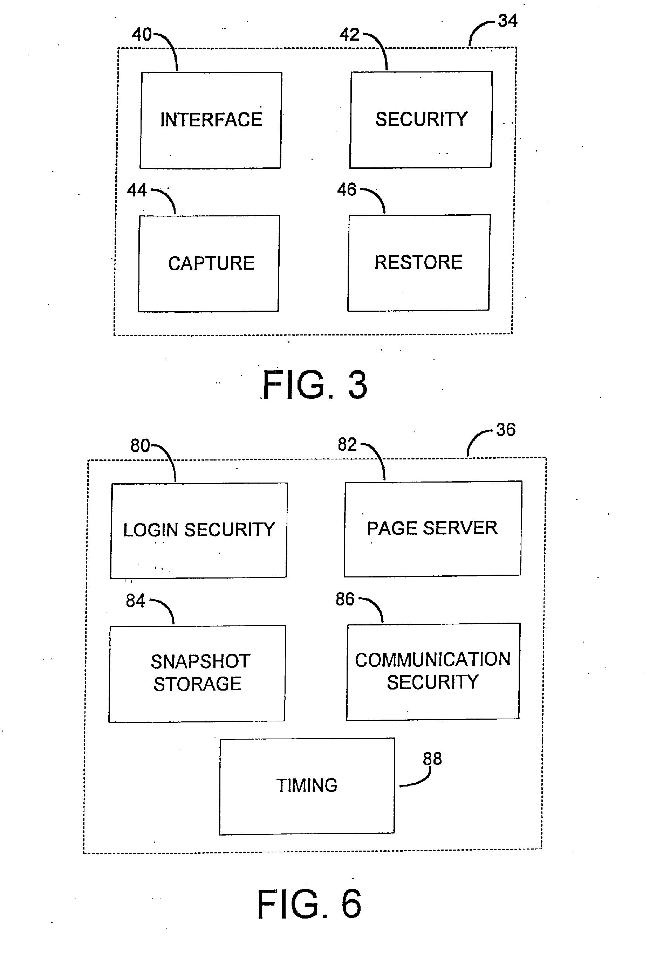

FIG. 6 is a block diagram of one embodiment of the BSR repository module 36. The BSR repository module 36 includes a login security component 80, a page server component 82, a snapshot storage component 84, a communication security component 86 and a timing component 88. In other embodiments, the functionality of the BSR repository module 36 may be illustratively depicted in greater or fewer numbers of components. In still other embodiments, the BSR repository module 36 may include transcoding services. The transcoding services may allow translation from one protocol to another protocol, such as, for example, transcoding HTML to caching HTTP (cHTML), cHTML to HTML, and/or any other possible protocol translations.

The login security component 80 may provide authentication and authorization of a user who provides login information through the login screen of the user interface bar 50 previously describe with reference to FIG. 4. The login security component 80 may operate to compare information in an account to the login information provided via the user interface bar 50. The account may be established and stored with the BSR repository module 36 by a user. Upon receipt of login information, the login security component 80 may access stored account information to authenticate the identity of a user. Following successful authentication, the user may be logged in and allowed access to the BSR repository module 36.

The page server component 82 may allow the BSR repository module 36 to function as a standard host serving documents to the user interface bar 50 as previously discussed with reference to FIGs. 4 and 5. In addition to documents, the page server component 82 may provide any other information related to the user identified with the login information. For example, a list of previously saved browser snapshots may be provided to the session selection field 72 as previously discussed. The list of saved browser snapshots may identify snapshots stored with the BSR repository module 36. In other embodiments, the page server component 82 may provide information within pages generated and displayed by other mechanisms, such as, for example, the interface component 40 (FIG. 3) or any other device in the network 12 (FIG. 2).

The snapshot storage component 84 may store browser snapshots captured by the BSR device module 34 as previously discussed with reference to FIGs. 3 and 5. Upon transmittal of a browser snapshot by the capture component 44 (FIG. 3), the snapshot storage component 84 may receive and archive the snapshot. The snapshot storage component 84 may direct the storage of browser snapshots in a storage mechanism associated with the device the BSR repository module 36 is operating within.

An exemplary storage mechanism includes a relational database operating in conjunction with a computer hard drive, an optical disc or any other data storage medium. In other embodiments, the snapshot storage component 84 may direct the storage of browser snapshots in any other storage mechanism in any other device within the network 12 (FIG. 2).

As previously discussed, each of the archived browser snapshots may be associated with the user who initiated the capture and storage of the browser states of the active sessions. Accordingly, the snapshots may be stored according to the identity of the user. In addition, access to the archived snapshots may be based on authentication of the identity, and authorization, of the user who initiated the capture and storage of the browser states.

Previously archived browser snapshots may be accessed by the snapshot storage component 84 based on the authentication and authorization of the user along with the user's identification of the requested snapshot. As previously discussed with reference to FIG. 5, an archived browser snapshot may be identified for retrieval with the session selection field 72 of the user interface bar 50. Selected browser snapshots may be retrieved from the storage mechanism and forwarded to the browser of the user for restoration and display as previously described. The snapshot component 84 may also perform password verification of the password associated with a selected stored browser snapshot.

Referring now to FIGs. 2 and 6, the communication security component 86 may provide secure communication with the BSR device module 34. The secure communication may involve any of the previously discussed protocols. Secure communication may involve, for example, the transmittal of login information, the transmittal of captured browser states from active sessions or any other communication between the BSR device module 34 and the BSR repository server 36. In addition, communication of any other sensitive information related to the BSR service 10 may be made secure using the communication security component 86.

The timing component 88 may manage an active session with a site 30 (FIG. 2) that has been stored with a browser snapshot. As known in the art, the site 30 may include a time-out policy for an active session. Accordingly, a browser snapshot archived for an extended period of time may no longer be restorable as an active session upon retrieval from storage.

In one embodiment the timing component 88 may periodically communicate with (e.g. ping) the site 30 to maintain activity of an active session for which a browser state has been captured and stored. The communication may include simply pinging the site 30, or may include whatever communication is needed to reset the timeout period. Based on the time at which each of the browser snapshots are saved, the timing component 88, may initiate communication to refresh the time-out period of the corresponding site 30.

In another embodiment, the timing component 88 may probe each of the sites 30 associated with a stored browser snapshot for a session time-out value. The user may then be informed by the timing component 88 to retrieve the browser snapshot before a time-out of the corresponding active session occurs. In addition, when the predetermined time is exceeded (or about to be exceeded), the timing component 88 may generate a time-out indication to the user indicating the browser snapshot for which a timeout has occurred (or will occur). In yet another embodiment of the BSR service 10, the time-out policies of the site 30 may be increased to accommodate active sessions for which a browser snapshot has been stored. In still other embodiments, the site 30 may suspend the timeout policy for an active session upon indication by the timing component 88 that a browser snapshot for the active session has been captured and stored.

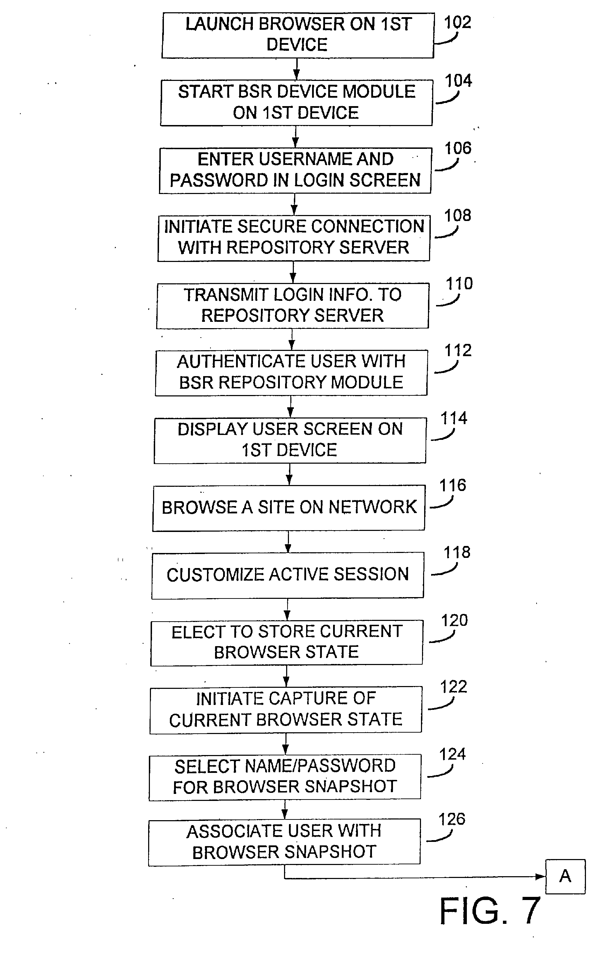

FIG. 7 is a block diagram illustrating operation of one embodiment of the BSR service 10 illustrated in FIGs. 1, 2, 3, 4 and 6. For purposes of this exemplary operational discussion, it is assumed that the user has previously created a user account to obtain access to the BSR service 10. In addition, the user has not yet captured or stored any browser snapshots from previous active sessions.

The operation begins at block 102 where the first browser 20 is launched on the first device 14. At block 104, the BSR device module 34 associated with the first device 14 and the first browser 20 is started. The user may enter a username and password in the login screen of the user interface bar 50 at block 106. At block 108, the BSR device module 34 initiates establishment of a secure connection with the repository server 18. The login information is transmitted over the secure connection to the repository server 18 at block 110. At block 112, the BSR repository module 36 within the repository server 18 may authenticate the user based on the login information and provide an authorization approval message to the BSR device module 34. The login screen is exchanged for the user screen in the user interface bar 50 at block 114. At block 116 the user may use the first browser 20 to locate and begin browsing a site by transmitting a request over the network 12.

The first browser 20 may communicate requests to the site 30 to customize an active session at block 118. Following customization, the user may elect to store the current browser state of the active session at block 120. At block 122, the capture of the current browser state of the active session is initiated by activating the snapshot button 64 in the user interface bar 50. Following capture of the browser state of the active session in a browser snapshot, a session name and password may be selected for the snapshot at block 124. At block 126, the user is associated with the browser snapshot.

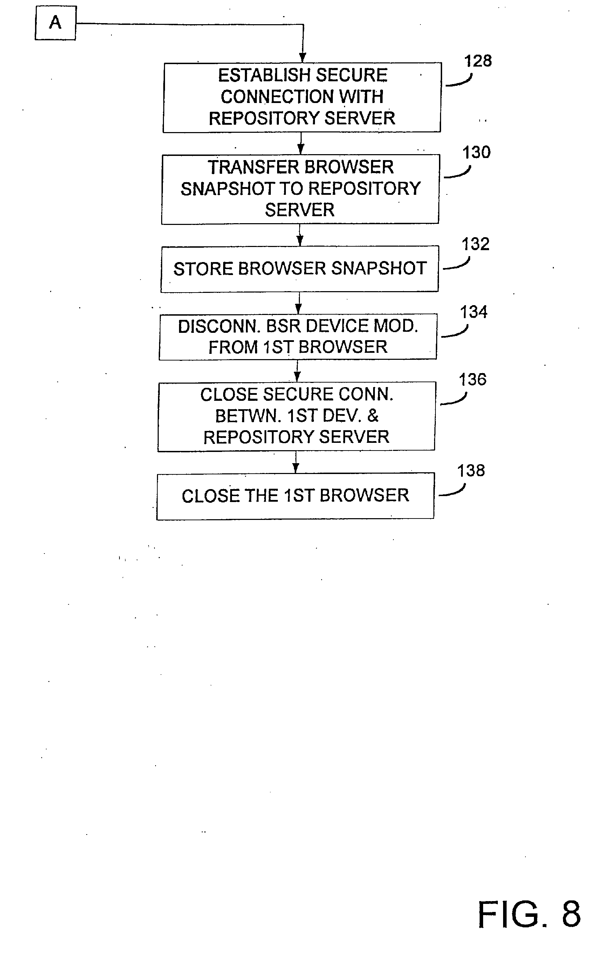

Referring now to FIG. 8, the BSR device module 34 initiates establishment of a secure connection between the first device 14 and the repository server 18 at block 128. Following establishment, the secure connection may be used to transfer the browser snapshot to the repository server 18 at block 130. At block 132, the browser snapshot may be deciphered and stored by the BSR repository module 36 based on the user associated with the browser snapshot. At block 134, the user may elect to end browsing by first activating the sign-off button 74 on the user interface bar 50 to disconnect the first browser 20 from the BSR repository module 34. The BSR repository module 36 closes the secure connection between the first device 14 and the repository server 18 at block 136. At block 138, the user may close the first browser 20.

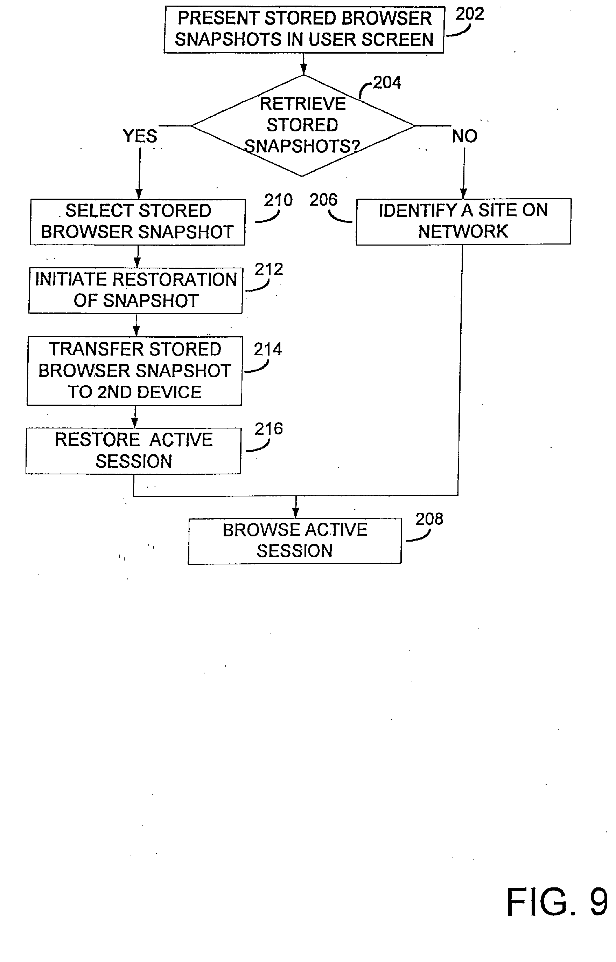

FIG. 9 is a block diagram illustrating operation of one embodiment of the BSR service 10 based on the subsequent launch of the second browser 22 on the second device 16 by the same user. For purposes of this exemplary operational discussion, it is assumed that the user previously stored a browser snapshot using the first browser 20 operating on the first device 14. Although not illustrated, previously described blocks 102 through 114 (FIG. 7) are repeated using the second device 16 in place of the first device 14 and the second browser 22 in place of the first browser 20.

Referring now to FIG. 9, the operation continues at block 202 where a list that includes the previously stored browser snapshot associated with the logged in user is downloaded over a secure connection and presented in the user interface bar 50. At block 204, the user may decide whether to retrieve a stored browser snapshot. If the user elects not to retrieve a stored browser snapshot, the user may use the second browser 22 to identify a site 30 on the network 12 at block 206. At block 208, the user may begin browsing within an active session by transmitting a request over the network 12. At block 208, the

If the user elects to retrieve a stored browser snapshot at block 204, the stored browser snapshot is selected from the session name field 66 and the associated password is supplied in the session password field 68 at block 210. At block 212, the restore button 70 in the user interface bar 50 is activated to initiate the restoration process. Following password verification, the selected stored browser snapshot is downloaded over a secure connection from the repository server 18 to the second device 22 at block 214.

At block 216, the BSR device module 34 restores the stored browser snapshot to re-create the active session in the second browser 22. The second browser 22 may begin browsing the site 30 associated with the restored active session by transmitting a request over the network 12 at block 208.

The remaining operation of the second browser 22 in further customizing and storing a browser state of the active session is similar to the operation previously described with reference to FIGs. 7 and 8. In other embodiments, the user may randomly utilize different devices and different browsers to browse sites as well as randomly customize active sessions, and store associated current browser states. In addition, the user may randomly utilize different devices and different browsers to retrieve and restore stored current browser states and continue the associated active sessions.

The previously discussed embodiments of the BSR service 10 allow a user to migrate among devices in the middle of a customized active session without losing the session and having to start over to re-customize the session on a different device. In addition, a user may keep track of multiple customized active sessions simultaneously by saving and continuing any of the active sessions at any time from any device. Saving an active session with the BSR service 10 simply involves taking a snapshot of the browser state of the current active session. The snapshot may be securely stored, and then later securely retrieved and restored to again be the current active session complete with any previous customization by the user. The user may store and retrieve browser snapshots with any browser and/or device. Accordingly, the BSR service allows association of browser snapshots with users of the BSR service rather than with any browser or device.

While the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative rather than a restrictive sense.

## Claims

1. A method of preserving an active session with a site, the active session established with a browser, the method comprising:
a) capturing a current browser state of an active session;
b) storing the current browser state;
c) retrieving the stored current browser state; and
d) restoring the active session.

2. The method of claim 1, wherein a) and b) are performed with a first browser and c) and d) are performed with a second browser.

3. The method as in claims 1 or 2, wherein b) comprises capturing at least one of a document object, a scripting object, a browser history and a cookie.

4. The method as in any of claims 1-3, wherein b) comprises associating the captured current browser state with a user.

5. The method as in any of claims 1-4, wherein b) comprises transmitting the current browser state of the active session over a network to a data storage device.

6. The method as in any of claims 1-5, wherein c) comprises allowing access to the stored current browser state by a user associated with the stored current browser state.

7. The method as in any of claims 1-6, wherein d) comprises restoring at least one of a document object, scripting objects, a browser history and a cookie.

8. The method as in any of claims 1-7, wherein a) and c) comprise logging in to authenticate the identity of the user and authorize the user.

9. The method as in any of claims 1-8, wherein a) comprises capturing in a storable format the current running state of the active session on a browser.

10. The method as in any of claims 1-9, wherein b) and c) comprises securely transmitting the current browser state over a network between a user device and a server.

11. The method as in any of claims 1-10, wherein the active session is established and captured with a first browser and retrieved and restored with a second browser.

12. The method of claim 11, wherein the first browser is operable on a first device and the second browser is operable on a second device.

13. The method as in any of claims 1-12, wherein b) comprises storing the current browser state of the active session with the browser and a repository server.

14. The method as in any of claims 1-13, comprising:
establishing a user account with a repository server; and
logging into the repository server with the browser to perform a) through d).

15. The method as in any of claims 1-14, wherein b) comprises managing the active session with the site while the current browser state remains stored, the active session managed by a repository server.

16. The method as in any of claims 1-15, wherein a) and c) are initiated with a user interface bar displayed with the browser.

17. The method as in any of claims 1-16, wherein c) comprises:
downloading a list to the browser; and
selecting the stored current browser state from the list.

18. The method as in any of claims 1-17, wherein d) comprises forming a secure connection between a repository server and the browser to download the stored current state of the active session to the browser.

19. A browser state repository service for preserving an active session with a site, the active session established with a browser, the browser state repository service comprising:
a server;
a first browser in communication with the server, the first browser operable to establish and customize an active session with a site, a current browser state of the active session storable with the first browser and the server; and
a second browser in communication with the server, the second browser operable with the server to retrieve the current browser state of the active session and continue the active session with the site in place of the first browser.

20. The browser state repository service as in of claim 19, wherein the server is operable as a repository for the current browser state.

21. The browser state repository service as in claims 19 or 20, wherein the server comprises a login security component, a page server component, a snapshot storage component, a communication security component and a timing component.

22. The browser state repository service as in any of claims 19-21, wherein the first and second browsers each comprise an interface component, a security component, a capture component and a restore component.

23. The browser state repository service as in any of claims 19-22, wherein the first browser is operable to capture and forward the current browser state over a secure connection to the server for storage.

24. The browser state repository service as in any of claims 19-23, wherein the second browser is operable to receive the active browser state from the server over a secure connection and restore the active session.

25. The browser state repository service as in any of claims 19-24, wherein the site comprises a website and communication with the website and the server is over the Internet.

26. The browser state repository service as in any of claims 19-25, wherein the server is operable to serve pages to a user interface bar displayed in the first and second browser, the user interface bar comprising at least one of a login screen and a user screen.

27. The browser state repository service as in any of claims 19-26, wherein the first browser is operable on a first device and the second browser is operable on a second device.
